# EUROPÄISCHE PATENTANMELDUNG

(11) **EP 0 762 090 A1**
(43) Veröffentlichungstag der Anmeldung: **12.03.1997**
(21) Anmeldenummer: 96113663.7
(22) Anmeldetag: 26.08.1996
(51) Int. Cl.: G01F 23/284, G01S 13/34, G01S 7/40

(54) **Verfahren zur Messung des Füllstandes einer Flüssigkeit**

(30) Priorität: 25.08.1995 DE 19531540
(71) Anmelder: KROHNE MESSTECHNIK GMBH & CO. KG, D-47058 Duisburg (DE)
(72) Erfinder: Van der Pol, Ronald, 5924 AK Venlo (NL)
(74) Vertreter: Patentanwälte Gesthuysen, von Rohr, Weidener, Schüll, Häckel

(57) **Zusammenfassung**

Die Erfindung betrifft ein Verfahren zur Messung des Füllstandes einer Flüssigkeit in einem Behälter nach dem Radarprinzip, mit Hilfe eines die Radarfrequenz bestimmenden spannungsgesteuerten Oszillators und mit Hilfe einer den spannungsgesteuerten Oszillator ansteuernden Spannungsquelle, bei welchem durch eine entsprechende Steuerung der Spannungsquelle die Radarfrequenzen nach dem FMCW-Verfahren moduliert werden.

Erfindungsgemäß ist ein solches bekanntes Verfahren dadurch ausgestaltet, daß die Frequenz des spannungsgesteuerten Oszillators zumindest regelmäßig während des Frequenzsweeps gemessen wird und daß ein nichtlinearer Frequenzverlauf während des Frequenzsweeps durch eine entsprechende Steuerung der Spannungsquelle korrigiert wird.

## Beschreibung

Die Erfindung betrifft ein Verfahren zur Messung des Füllstandes einer Flüssigkeit in einem Behälter nach dem Radarprinzip, mit Hilfe eines die Radarfrequenz bestimmenden spannungsgesteuerten Oszillators und mit Hilfe einer den spannungsgesteuerten Oszillator ansteuernden Spannungsquelle, bei welchem durch eine entsprechende Steuerung der Spannungsquelle die Radarfrequenzen nach dem FMCW-Verfahren moduliert werden.

Die bekannten Verfahren, von denen die Erfindung ausgeht, sind aus dem Stand der Technik in einer Vielzahl von Abwandlungen bekannt. Ein wesentliches Problem dieser bekannten Verfahren ist die Abweichung des tatsächlichen Frequenzverlaufes während eines gemäß dem FMCW-Verfahrens vorgesehenen Frequenzsweeps von dem vorgegebenen Frequenzeverlauf. Durch solche nichtlinearen Frequenzverläufe während eines Frequenzsweeps kommit es zu Ungenauigkeiten in der Messung des Füllsfandes einer Flüssigkeit in einem Behälter.

Aus dem Stand der Technik sind nun verschiedene Maßnahmen bekannt, um die geschilderte Problematik zu entschärfen. Da ein nichtlinearer Frequenzverlauf während des Frequenzsweeps bei unterschiedlichen Füllständen zu unterschiedlichen Fehlern in dem Meßergebnis für den Füllstand führen kann, ist ein Referenzreflektor bzw. ein festes Referenzkabel, welches das Vorhandensein eines Referenzreflexes der Radarwetten gewährleistet, nicht ausreichend, um den geschilderten Einfluß auf die Meßgenauigkeit des Verfahrens zu eliminieren. Um eine gewünschte Meßgenauigkeit im mm-Bereich, zumindest aber im cm-Bereich zu gewährleisten, ist es erforderlich, eine Vielzahl von Referenzreflektoren über die Höhe des Behälters anzuordnen. Eine solche Vorgehensweise ist jedoch sowohl vorrichtungsmäßig als auch verfahrensmäßig relativ aufwendig. Eine weitere aus den, Stand der Technik bekannte Maßnahme zur Lösung des geschilderten Problem besteht darin, zur Ansteuerung des spannungsgesteuerten Oszillators einen Digital/Analog-Wandler als Spannungsquelle einzusetzen. Dieser Digital/Analog-Wandler wird bei dem bekannten Verfahren von einem Mikroprozessor derart angesteuert, daß durch den von dem Digital/Analog-Wandler ausgegebenen Spannungsverlauf die Nichtlinearität des spannungsgesteuerten Oszillators kompensiert wird. Grundlage der Ansteuerung des Spannungsgesteuerten Oszillators durch den Digital/Analog-Wandler mittels des Mikroprozessors ist bei dem bekannten Verfahren der Spannung/Frequenz-Verlauf des spannungsgesteurten Oszillators, der unter statischen Bedingungen, d. h. bei über einen gewissen Zeitraum anliegenden Spannungen aus den jeweils ausgegebenen Frequenzen bestimmt wird. Auch mit diesen bekannten Maßnahmen wird jedoch die für industrielle Anwendungen erforderliche Meßgenauigkeit für den Füllstand nicht erreicht.

Dei Erfindung liegt somit die Aufgabe zugrunde, die bekannten Verfahren zur Messung des Füllstandes einer Flüssigkeit in einem Behälter nach dem Radarprinzip derart auszugestalten und weiterzubilden, daß die Meßgenauigkeit für den Füllstand deutlich erhöht wird.

Erfindungsgemäß ist die zuvor aufgezeigte und dargelegte Aufgabe dadurch gelöst, daß die Frequenz des spannungsgesteuerten Oszillators zumindest regelmäßig während des Frequenzsweeps gemessen wird und daß ein nichtlinearer Frequenzverlauf während des Frequenzsweeps durch eine entsprechende Steuerung der Spannungsquelle korrigiert wird. Durch die erfindungsgemäße Ausgestaltung des Verfahrens wird gewährleistet, daß der Frequenzverlauf während des Frequenzsweeps eine in jedem Falle optimale Linearität aufweist. Diese Linearität wird weder durch Temperatureinflüsse oder sonstige Umgebungsbedingungen noch durch Alterungsprozesse beeinflußt, da sie, im Gegensatz zu dem bekannten Verfahren, welches auf einer Korrektur anhand des ausschließlich unter statischen Bedingungen aufgenommenen Spannungs/Frequenz-Verlaufs des spannungsgesteuerten Oszillators basiert, ständig überprüft und korrigiert wird. Durch die erfindungsgemäßen Maßnahmen ist gewährleistet, daß die im industriellen Bereich geforderten Meßgenauigkeiten im mm-Bereich bzw. cm-Bereich ohne weiteres erreicht werden. Hierzu genügt unter Umständen schon eine regelmäßige Messung des Frequenzverlaufs bei jedem n-ten Frequenzsweep zur Korrektur.

Wird nun die erfindungsgemäße Korrektur eines Frequenzverlaufs eines Frequenzsweeps anhand der gemessenen Frequenzen des aktuellen Frequenzsweeps vorgenommen, so ist durch diese Maßnahme selbst die Korrektur ganz kurzfristiger Einflüsse auf die Linearität des Frequenzverlaufs während des Frequenzsweeps gewährleistet.

Da nun aufgrund der endlichen Bearbeitungsgeschwindigkeit für die Meßergebnisse hinsichtlich der Frequenz des spannungsgesteuerten Oszillators eine Totzeit zwischen der Feststellung der Abweichung des tatsächlichen Frequenzverlaufs von dem vorgegebenen linearen Frequenzverlauf und der Korrektur verstreicht, ist es vorteilhaft, die Zeitdauer des Frequenzsweeps zu vergrößern uni damit die zeitliche Änderung der Frequenzen zu verringern und die Korrektur zu verbessern. Dies wird dadurch gewährleistet, daß die Zeitdauer des Frequenzsweeps in einem Intervall umgekehrt proportional zur zeitlichen Änderungen des Füllstandes gewählt wird. Die zeitliche Änderung des Füllstandes muß berücksichtigt werden, da bei einer zu starken Verlängerung der Zeitdauer des Frequenzsweeps bei gleichzeitiger Änderung des Füllstandes keine exakte Bestimmung des Füllstandes mehr möglich ist. Steigt oder sinkt also der Füllstand relativ schnell, so muß die Zeitdauer des Frequenzsweeps verringert werden, um eine hinreichende Meßgenauigkeit zu gewährleisten, wobei gleichzeitig die Korrektur des Frequenzverlaufs anhand der gemessenen Frequenzen des aktuellen Frequenzsweeps auf Grund der erläuterten Totzeit leidet. Durch das vorgegebene Intervall wird gewährleistet, daß die Zeitdauer des Frequenzsweeps bestimmte sinnvolle Grenzen nicht über- oder unterschreitet.

Da somit bei großen zeitlichen Änderungen des Füllstandes z.B. bei schneller Befüllung die Meßgenauigkeit für den Füllstand der Flüssigkeit in dem Behälter zunehmend leidet, ist es hilfreich daß bei großen zeitlichen Änderungen des Füllstandes dann ein diese Änderungen anzeigendes Statussignal ausgegeben wird. Eine zentrale Steuereinheit, die in dem industriellen Prozeß den Füllstand einer Flüssigkeit in einem Behälter mit Hilfe des erfindungsgemäßen Verfahrens beobachtet, erhält somit die Information, daß augenblicklich die Meßgenauigkeit für den Füllstand relativ gering ist, was diese zentrale Steuereinheit beispielsweise dahingehend auswerten kann, daß sie die bei Anliegen des erwähnten Statussignals empfangenen Meßwerte nicht für weitere Berechnungen heranzieht.

Eine Alternative zur direkten Korrektur des Frequenzverlauf eines Frequenzsweeps anhand der gemessenen Frequenzen des aktuellen Frequenzsweeps besteht darin, daß die Korrektur des Frequenzverlaufs eines Frequenzsweeps anhand der gemessenen Frequenzen eines Frequenzverlaufs oder auch mehrerer gemittelter Frequenzverläufe vorangegangener Frequenzsweeps vorgenommen wird. Bei dieser Alternative des erfindungsgemäßen Verfahrens werden sehr kurzfristige Einflüsse auf die Linearität des Frequenzverlaufs dann zwar während eines Frequenzsweeps nicht berücksichtigt, wohingegen aber mittel- bis langfristige Einflüsse sehr effektiv korrigiert werden. Die geschilderte Alternative des erfindungsgemäßen Verfahrens ermöglicht auch eine sehr geringe Zeitdauer für den Frequenzsweep, da die durch die Verarbeitung der Meßwerte für die Frequenzen entstehende Totzeit in aller Regel deutlich geringer ist als die Zeitintervalle zwischen zwei aufeinanderfolgenden Frequenzsweeps. Folglich besteht hier auch nicht die Notwendigkeit, die Zeitdauer des Frequenzsweeps abhängig von der zeitlichen Änderung des Füllstandes zu wählen.

Um die kurzfristigen Einflüsse auf die Linearität des Frequenzverlaufs während des Frequenzsweeps möglichst zu verringern, ist es zweckmäßig, daß die Zeitdauer des Frequenzsweeps und die Zeitintervalle zwischen den Frequenzsweeps konstant gehalten werden. Hierdurch stabilisieren sich die Bedingungen für den Betrieb der beteiligten elektrischen und elektronischen Komponenten, so daß zumindest aus diesen elektrischen und elektronischen Komponenten selbst keine kurzfristigen Einflüsse die Linearität des Frequenzverlaufs während eines Frequenzsweeps beeinflussen.

Eine Kombination der zuvor geschilderten Alternativen dadurch, daß die Korrektur des Frequenzverlaufs eines Frequenzsweeps anhand der gemessenen Frequenz des aktuellen Frequenzsweeps und der gemessenen Frequenzen eines Flequenzverlaufs oder mehrerer gemittelter Frequenzverläufe vorangegangener Frequenzsweeps vorgenommen wird, vereinbart auf Kosten eines komplexen Auswertungsalgorithmusses im wesentlichen die Vorteile der beiden bislang geschilderten alternativen Ausgestaltungen des erfindungsgemäßen Verfahrens.

Die bislang geschilderten Ausgestaltungen des erfindungsgemäßen Verfahrens werden sämtlich dadurch vorteilhaft weitergebildet, daß zur Korrektur des Frequenzverlaufs der Frequenzsweeps ein Regelalgorithmus eingesetzt wird. Welcher Regelalgorithmus in dem jeweiligen Fall eingesetzt werden kann, ergibt sich aus den bekannten Eigenschaften von Regelalgorithmen hinsichtlich zum Beispiel Geschwindigkeit und Genauigkeit.

Da die Frequenzen im Radarbereich häufig sehr hoch sind, ist es vorteilhaft, wenn die Frequenzen des spannungsgesteuerten Oszillators vor der Messung in einem Mischer heruntergemischt oder in einem Teiler heruntergeteilt werden. Durch diese Maßnahme ist gewährleistet, daß der Frequenzverlauf des spannungsgesteuerten Oszillators anhand eines Signals mit niedriger Frequenz mit Hilfe einer weniger aufwendigen Elektronik meßbar wird. Diese Maßnahme erübrigt sich in der Regel in den Fällen, in denen die Radarfrequenz aus der Frequenz des spannungsgesteuerten Oszillators erst über Frequenzvervielfacher abgeleitet wird.

Die Messung der Frequenzen des spannungsgesteuerten Oszillators kann weiter vorteilhaft dadurch genutzt werden, daß der Frequenzhub der Frequenzen des spannungsgesteuerten Oszillators während eines Frequenzsweeps anhand der gemessenen Frequenzen geregelt wird. Auch durch diese Maßnahme wird die Meßgenauigkeit für den Füllstand einer Flüssigkeit in einem Behälter weiter erhöht.

Im einzelnen gibt es nun eine Vielzahl von Möglichkeiten, das erfindungsgemäße Verfahren zur Messung des Füllstandes einer Flüssigkeit in einem Behälter nach dem Radarprinzip auszugestalten und weiterzubilden. Dazu wird verwiesen einerseits auf die dem Patentanspruch 1 nachgeordneten, zuvor erläuterten Patentansprüche, andererseits auf die Beschreibung eines bevorzugten Ausführungsbeispiels in Verbindung mit der Zeichnung. In der Zeichnung zeigen
- Fig. 1: ein Ausführungsbeispiel einer in einem Behälter angeordneten Vorrichtung zur Verwirklichung des erfindungsgemäßen Verfahrens,
- Fig. 2: eine schematische Darstellung der funktionsnotwendigen Bestandteile des Ausführungsbeispiels einer in einem Behälter angeordneten Vorrichtung zur Verwirklichung des erfindungsgemäßen Verfahrens und
- Fig. 3 a) - c): die Spannungs/Frequenz-Diagramme eines spannungsgesteuerten Oszil lators, die Spannungs/Zeit-Diagramme einer gesteuerten Spannungsquelle und die Frequenz/Zeit-Diagramme eines Frequenzsweeps.

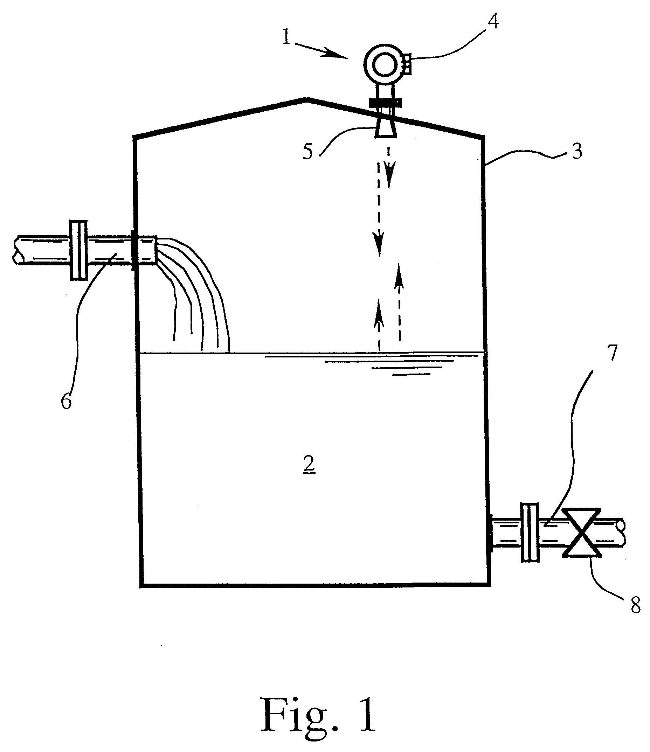

In Fig. 1 ist ein Ausführungsbeispiel einer Vorrichtung 1 zur Verwirklichung eines erfindungsgemäßen Verfahrens zur Messung des Füllstandes einer Flüssigkeit 2 in einem Behälter 3, welches nach dem Radarprinzip arbeitet, dargestellt. Die Vorrichtung 1 weist auf eine Steuereinheit 4 und eine Sende- bzw. Empfangsantenne 5 für die in Richtung der Oberfläche der Flüssigkeit 2 abgestrahlten bzw. von ihr reflektierten Radarwellen. Weiter ist in Fig. 1 der Zulauf 6 und der Ablauf 7 des Behälters 3 dargestellt. Nur schematisch ist schließlich in Fig. 1 ein beispielsweise steuerbares Ventil 8 am Ablauf 7 des Behälters 3 dargestellt.

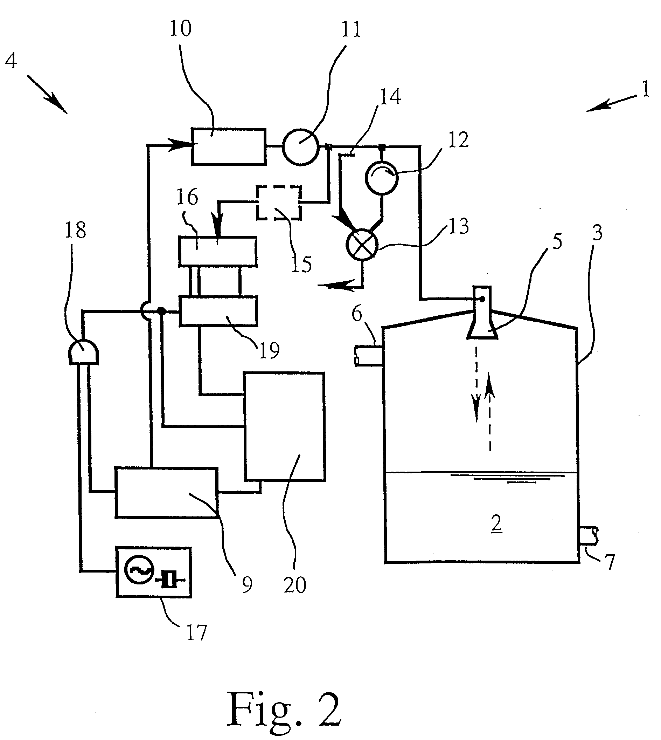

In Fig. 2 ist zunächst ähnlich wie in Fig. 1 der Behälter 3 mit Zulauf 6 und Ablauf 7 und der im Behälter befindlichen Flüssigkeit 2 dargestellt. Weiter ist die Vorrichtung 1 zur Verwirklichung des erfindungsgemäßen Verfahrens schematisch aufgegliedert in ihren funktionsnotwendigen Bestandteilen dargestellt. Die in Fig. 2 ausführlich dargestellte Steuereinheit 4 weist zunächst einen Mikroprozessor 9 auf, der über einen Digital/Analog-Wandler 10 einen spannungsgesteuerten Oszillator 11 ansteuert. Dieser spannungsgesteuerte Oszillator 11 erzeugt ein nach dem FMCW-Verfahren moduliertes Hochfrequenzsignal, das in die Sende- bzw. Empfangsantenne 5 eingekoppelt, in den Behälter 3 abgestrahlt. von der Oberfläche der Flüssigkeit 2 reflektiert, von der Sende- bzw. Empfangsantenne 5 wieder empfangen und über einen Richtkoppler 12 einem Mischer 13 zugeführt wird. Dieser Mischer 13 erzeugt mit Hilfe des über ein Koppelglied 14 ausgekoppelten modulierten Hochfrequenzsignals eine Zwischenfrequenz, die von der Steuereinheit 4 zur Bestimmung der Laufzeit des Radarsignals weiter ausgewertet wird. Diese Auswertung ist an sich bekannt und wird hier nicht weiter erläutert.

Das modulierte Hochfrequenzsignal am Ausgang des spannungsgesteuerten Oszillators 11 wird zur Messung des Frequenzverlaufes im dargestellten Ausführungsbeispiel zunächst einen, Frequenzteiler 15 zugeführt. Alternativ zu dem in Fig. 2 dargestellten Frequenzteiler 15 kann ebenfalls ein zweiter Mischer eingesetzt werden, mit Hilfe dessen das modulierte Hochfrequenzsignal am Ausgang des spannungsgesteuerten Oszillators 11 mit einem Hochfrequenzsignal beispielsweise eines dielektrischen Resonanzoszillators derart gemischt wird, daß am Ausgang des Mischers ein in der Modulation mit dem Hochfrequenzsignal übereinstimmendes Frequenzsignal deutlich niedrigerer Frequenz anliegt.

Bei dem in Fig. 2 dargestellten Ausführungsbeispiel wird das heruntergeteilte modulierte Hochfrequenzsignal einem Zähler 16 zugeführt, der die Perioden des Frequenzsignals zählt. Der Stand des Zahlers 16 wird in von einem Referenz-Oszillator 17 in Verbindung mit dem Mikroprozessor 9 und einen Tor 18 gesteuerten Intervallen über von dem Tor 18 angesteuerten Latches 19 in einen Dual-Port-RAM 20 ausgelesen und gespeichert. Parallel zur Speicherung in dem Dual-Port-RAM 20 können die Zählerstände gleichzeitig von dem Mikroprozessor 9 aus dem Dual-Port-RAM 20 ausgelesen werden, so daß gewährleistet ist, daß die Korrektur des Frequenzverlaufs eines Frequenzsweeps dann anhand der gemessenen Frequenzen des aktuellen Frequenzsweeps vorgenommen werden kann. Die Korrektur eines nichtlinearen Frequenzverlaufs während eines Frequenzsweeps erfolgt in dem dargestellten Ausführungsbeispiel dadurch, daß der Mikroprozessor 9 den Digital/Analog-Wandler 10 und damit den spannungsgesteuerten Oszillator 11 anhand der Meßergebnisse für die Frequenzen derart ansteuert, daß ein linearer Frequenzverlauf des Frequenzsweeps hergestellt wird.

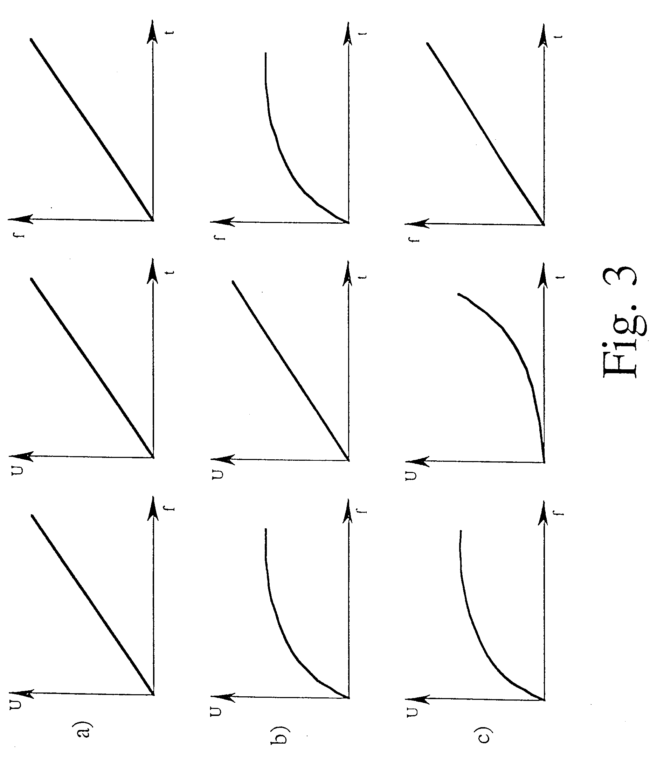

In Fig. 3a) ist für ein ideales Verhalten ganz links das Spannungs/Frequenz-Diagramm eines spannungsgesteuerten Oszillators, in der Mitte das Spannungs/Zeit-Diagramm einer gesteuerten Spannungsquelle und ganz rechts das Frequenz/Zeit-Diagramm des resultierenden Frequenzsweeps dargestellt. Bei einem derart idealen Verlauf der Frequenz des spannungsgesteuerten Oszillators abhängig von seiner Eingangsspannung ergibt sich bei einem ebenfalls idealen Verlauf der Ausgangsspannung der Spannungsquelle keine Notwendigkeit zur Korrektur des resultierenden Frequenzsweeps.

Fig. 3b) zeigt nun wiederum ganz links den realistischen Fall des Spannungs/Frequenz-Verlaufs eines spannungsgesteuerten Oszillators, der relativ stark nichtlinear ist. Erfolgt nun die Ansteuerung eines solchen spannungsgesteuerten Oszillators gemäß dem in Fig. 3b) in der Mitte dargestellten linearen Spannungs/Zeit-Verlaufs einer gesteuerten Spannungsquelle, so resultiert daraus ein ganz rechts in Fig. 3b) dargestellter nichtlinearer Frequenzverlauf während eines Frequenzsweeps mit der damit verbundenen reduzierten Meßgenauigkeit.

Fig. 3c) zeigt nun ganz links ebenfalls den relativ stark nichtlinearen Verlauf des Spannungs/Frequenz-Verhältnisses eines realen spannungsgesteuerten Oszillators. In der Mitte von Fig. 3c) ist dargestellt, wie das Spannungs/Zeit-Verhältnis einer gemäß dem erfindungsgemäßen Verfahren gesteuerten Spannungsquelle aussieht, so daß sich der erwünschte, in Fig. 3c) ganz rechts dargestellte lineare Frequenzverlauf während eines Frequenzsweeps ergibt.

Abschließen soll noch erwähnt werden, daß die in Fig. 2 dargestellte Realisierung des erfindungsgemäßen Verfahrens mit vorwiegend digitalen Komponenten zwar vorteilhaft, aber nicht zwingend notwendig ist. Auch die Teilung des modulierten Hochfrequenzsignals des spannungsgesteuerten Oszillators ist bei den heutzutage immer höhere Geschwindigkeitsanforderungen erfüllenden Bauteilen je nach Frequenz schon heute oder in nahe Zukunft nicht mehr nötig.

## Patentansprüche

1. Verfahren zur Messung des Füllstandes einer Flüssigkeit in einem Behälter nach den, Radarprinzip, mit Hilfe eines die Radarfrequenz bestimmenden spannungsgesteuerten Oszillators und mit Hilfe einer den spannungsgesteuerten Oszillator ansteuernden Spannungsquelle, bei welchem durch eine entsprechende Steuerung der Spannungsquelle die Radarfrequenzen nach dem FMCW-Verfahren moduliert werden, **dadurch gekennzeichnet**, daß die Frequenz des spannungsgesteuerten Oszillators zumindest regelmäßig während des Frequenzsweeps gemessen wird und daß ein nichtlinearer Frequenzverlauf während des Frequenzsweeps durch eine entsprechende Steuerung der Spannungsquelle korrigiert wird.

2. Verfahren nach Anspruch 1, dadurch gekennzeichnet, daß die Korrektur des Frequenzverlaufs eines Frequenzsweeps anhand der gemessenen Frequenzen des aktuellen Frequenzsweeps vorgenommen wird.

3. Verfahren nach Anspruch 2, dadurch gekennzeichnet, daß die Zeitdauer des Frequenzsweeps in einem Intervall umgekehrt proportional zur zeitlichen Änderung des Füllstandes gewählt wird.

4. Verfahren nach Anspruch 2 oder 3, dadurch gekennzeichnet, daß bei großen zeitlichen Änderungen des Füllstandes ein diese Änderungen anzeigendes Statussignal ausgegeben wird.

5. Verfahren nach Anspruch 1, dadurch gekennzeichnet, daß die Korrektur des Frequenzverlaufs eines Frequenzsweeps anhand der gemessenen Frequenzen eines Frequenzverlaufes oder mehrerer gemittelter Frequenzverläufe vorangegangener Frequenzsweeps vorgenommen wird.

6. Verfahren nach Anspruch 5, dadurch gekennzeichnet, daß die Zeitdauer des Frequenzsweeps und die Zeitintervalle zwischen den Frequenzsweeps konstant gehalten werden.

7. Verfahren nach Anspruch 1, dadurch gekennzeichnet, daß die Korrektur des Frequenzverlaufs eines Frequenzsweeps anhand der gemessenen Frequenzen des aktuellen Frequenzsweeps und der gemessenen Frequenzen eines Frequenzverlaufs oder mehrerer gemittelter Frequenzverläufe vorangegangener Frequenzsweeps vorgenommen wird.

8. Verfahren nach einem der Ansprüche 1 bis 7, dadurch gekennzeichnet, daß zur Korrektur des Frequenzverlaufs eines Frequenzsweeps ein Regelalgorithmus verwendet wird.

9. Verfahren nach einem der Ansprüche 1 bis 8, dadurch gekennzeichnet, daß die Frequenzen des spannungsgesteuerten Oszillators vor der Messung in einen Mischer heruntergemischt oder in einem Teiler heruntergeteilt werden.

10. Verfahren nach einem der Ansprüche 1 bis 9, dadurch gekennzeichnet, daß der Frequenzhub der Frequenzen des Oszillators während eines Frequenzsweeps anhand der gemessenen Frequenzen geregelt wird.
